# EUROPÄISCHE PATENTSCHRIFT

(11) **EP 0 634 458 B1**
(45) Veröffentlichungstag und Bekanntmachung des Hinweises auf die Patenterteilung: **02.10.1996**
(21) Anmeldenummer: 94110463.0
(22) Anmeldetag: 05.07.1994
(51) Int. Cl.: C09C 1/00, C09D 7/12, C09D 11/00, C08K 9/02, C04B 14/02, C04B 33/14

(54) **Kohlenstoffhaltige Glanzpigmente**
Brilliant pigments containing carbon
Pigments brillants contenant du carbone

(30) Priorität: 15.07.1993 DE 4323744
(43) Veröffentlichungstag der Anmeldung: 18.01.1995
(73) Patentinhaber: BASF Aktiengesellschaft, 67063 Ludwigshafen (DE)
(72) Erfinder: Schmid, Raimund, Dr., D-67435 Neustadt (DE); Mronga, Norbert, Dr., D-69221 Dossenheim (DE); Ostertag, Werner, Dr., D-67269 Gruenstadt (DE); Schmidt, Helmut, D-67574 Osthofen (DE)

(56) Entgegenhaltungen:
- EP-A- 0 499 864
- EP-A- 0 525 526
- WO-A-93/12182
- DE-A- 4 137 860
- FR-A- 1 326 900

## Beschreibung

Die vorliegende Erfindung betrifft neue Glanzpigmente auf Basis beschichteter, plättchenförmiger, silikatischer Substrate, die eine im wesentlichen aus Kohlenstoff und Aluminium-, Chrom-, Cer-, Zirkon- und/oder Antimonoxid bestehende Schicht enthalten, erhältlich durch Aufbringen kohlenstoffhaltiger Verbindungen der Metalle Aluminium, Chrom, Cer, Zirkon, Antimon oder Mischungen dieser Verbindungen und gegebenenfalls weiterer kohlenstoffhaltiger Verbindungen der Summenformel (CH₂O)n, in der n für eine monomere Einheit 1 bis 6 bedeutet, auf die Substratteilchen und anschließende thermische Zersetzung der kohlenstoffhaltigen Verbindungen an der Oberfläche der Substratteilchen unter Sauerstoffausschluß.

Außerdem betrifft die Erfindung die Herstellung dieser Glanzpigmente sowie ihre Verwendung zum Einfärben von Lacken, Druckfarben, Kunststoffen, Gläsern und keramischen Produkten.

Glanz- oder Effektpigmente werden in zunehmendem Maße in vielen Bereichen der Technik eingesetzt, beispielsweise in Automobillakken, in der dekorativen Beschichtung, der Kunststoffeinfärbung, in Druck-, Anstrich-, insbesondere Sicherheitsfarben sowie in der Kosmetik.

Ihre optische Wirkung beruht auf der gerichteten Reflexion an überwiegend flächig ausgebildeten, ausgerichteten, metallischen oder stark lichtbrechenden Pigmentteilchen. Je nach Art der Pigmentteilchen spricht man auch von Metalleffektpigmenten (z.B. Aluminium-, Zink- oder Kupferflakes) oder Perlglanzpigmenten (z.B. hochbrechende, transparente, plättchenförmige Metalloxide wie Bismutoxychlorid oder mit hochbrechenden Metalloxiden wie Titan- oder Zirkondioxid beschichtete, silikatische Substrate wie Muskovit, Phlogopit, Biotit, Talkum oder Glas).

Daneben gibt es eine Reihe von Kombinationspigmenten, bei denen die oben genannten Pigmente mit weiteren, insbesondere farbigen, hochbrechenden Metalloxiden wie Chromoxid und vor allem Eisenoxid beschichtet sind. Durch Interferenz-, Reflexions- und Absorptionsphänomene ergibt sich hier in Abhängigkeit von der Dicke der Metalloxidschicht eine Vielzahl von winkelabhängigen Farb- und Helligkeitseindrücken. Man nennt diese Pigmente daher auch Interferenzpigmente.

Bekanntermaßen können die insbesondere bei Perlglanzpigmenten nur zarten Interferenzfarben und Körperfarben durch das Aufbringen nichtselektiv absorbierender Materialien wie Kohlenstoff deutlich verstärkt werden. Dabei werden sowohl im wesentlichen nur aus Kohlenstoff bestehende als auch neben Kohlenstoff Metalloxid enthaltende Schichten aufgebracht.

Aus den US-A 3 087 827 und 3 107 173 sowie der DE-A- 41 41 069 ist die Belegung von Glimmerpigmenten mit einer im wesentlichen aus Kohlenstoff bestehenden Schicht beschrieben. In den beiden erstgenannten Fällen erfolgt die Beschichtung durch Pyrolyse von sauerstoffarmen bzw. keinen Sauerstoff enthaltenden Kohlenwasserstoffen in Gegenwart der Glimmerpigmente und unter Sarnerstoffausschluß, im letztgenannten Fall werden sauerstoffreiche Kohlenwasserstoffe, insbesondere Zucker, auf die Substratteilchen aufgebracht und dann thermisch zersetzt. Dabei entstehen besonders glatte, filmartige Schichten. Nachteilig bei diesen, mit einer reinen Kohlenstoffschicht belegten Pigmenten ist jedoch ihre insbesondere bei niedrigen Kohlenstoffgehalten (< 1 Gew.-%, bezogen auf das fertige Pigment) für viele Anwendungszwecke nicht ausreichende Lichtechtheit.

Die DE-A-25 57 796 und 41 04 846 betreffen die Ausbildung kohlenstoffhaltiger Metalloxidschichten durch gemeinsames Auffällen von Rußpigmenten und Metallhydroxiden aus wäßrigem Medium auf Perlglanzpigmente und anschließendes Glühen unter Sauerstoffausschluß. Nachteilig bei dieser Vorgehensweise ist, daß die Rußpartikel schlecht und nur unter Zusatz von Hilfsmitteln in der wäßrigen Phase zu dispergieren sind. Die Bildung von Rußagglomeraten ist also nur schwer zu verhindern, und der Einbau solcher Agglomerate in die Metalloxidschichten bringt Glanzverluste mit sich.

In der DE-A-41 25 134 wird schließlich die Abscheidung von Kohlenstoffschichten durch Pyrolyse von leicht flüchtigen Kohlenwasserstoffen oder Auffällen von Fettsäuren und anschließende Pyrolyse sowie die Ausbildung Kohlenstoff und Calcium- oder Eisenoxid enthaltender Schichten durch Auffallen von Calciumstearat bzw. Eisenoxalat und anschließende pyrolyse beschrieben. Da die thermische Behandlung unter Sauerstoffausschluß vorgenommen wird, sollen im oder bereits auf dem Substrat befindliche Metalloxide zumindest teilweise reduziert werden.

Der Erfindung lag die Aufgabe zugrunde, kohlenstoffhaltige Glanzpigmente bereitzustellen, die sich durch gute Anwendungseigenschaften, besonders auch ausreichende Lichtechtheit auszeichnen.

Demgemäß wurden die eingangs definierten Glanzpigmente gefunden.

Weiterhin wurde das hierdurch definierte Verfahren zur Herstellung dieser Glanzpigmente gefunden.

Außerdem wurde die Verwendung dieser Pigmente zur Einfärbung von Lacken, Druckfarben, Kunststoffen, Gläsern und keramischen Produkten gefunden.

Als plättchenformige, silikatische Substrate für die erfindungsgemäßen Glanzpigmente kommen insbesondere helle bzw. weiße Glimmer in Betracht, wobei Schuppen von vorzugsweise naß vermahlenem Muskovit besonders bevorzugt sind. Selbstverständlich sind auch andere natürliche Glimmer, wie Phlogopit und Biotit, künstliche Glimmer, Talk- und Glasschuppen geeignet.

Die silikatischen Substratteilchen sind vorzugsweise in einer ersten Schicht mit hochbrechenden Metalloxiden wie Titan-, Zirkon-, Zinn-, Aluminium-, Silicium-, Zinkoxid, Bismutorychlorid oder deren Mischungen belegt. Bevorzugt ist dabei eine Beschichtung mit Zirkondioxid und besonders bevorzugt mit Titandioxid.

Diese einfach beschichteten Pigmente sind allgemein bekannt und beispielsweise in den DE-C 14 67 468, EP-A 45 851, DE-A 32 37 264 und DE-A 36 17 430 beschrieben. Metalloxidbeschichtete Glimmerplättchen sind auch unter dem Namen Iriodin^{®} (E. Merck, Darmstadt), Flonac^{®} (Kemira Oy, Pori, Finnland) oder Mearlin^{®} (Mearl Corporation, New York) im Handel.

Die Größe der Substratteilchen ist an sich nicht kritisch und kann auf den jeweiligen Anwendungszweck abgestimmt werden. In der Regel haben die Teilchen größte Durchmesser von etwa 1 bis 200 µm, insbesondere etwa 5 bis 100 µm, und Dicken von etwa 0,1 bis 5 µm, insbesondere etwa 0,5 µm.

Bei den erfindungsgemäßen Glanzpigmenten sind die vorzugsweise bereits mit hochbrechendem Metalloxid beschichteten Substratteilchen mit einer weiteren Schicht belegt, die neben Kohlenstoff auch Aluminium-, Chrom-, Cer-, Zirkon- und/oder Antimonoxid enthält. Bevorzugte Metalloxide sind Aluminium- und Chromoxid sowie auch deren Mischungen.

Die erfindungsgemäßen, Kohlenstoff und Metalloxid enthaltenden Schichten können vorteilhaft durch Aufbringen kohlenstoffhaltiger Verbindungen der genannten Metalle und gegebenenfalls weiterer kohlenstoffhaltiger Verbindungen, welche die Summenformel (CH₂O)ₙ (n: für eine monomere Einheit 1 bis 6) haben, auf die Substratteilchen und anschließende thermische Zersetzung an der Oberfläche der Substratteilchen unter Sauerstoffausschluß erhalten werden.

Als kohlenstoffhaltige Metallverbindungen eignen sich solche Verbindungen, die in wäßrigem Medium, gegebenenfalls in Anwesenheit organischer Säuren, löslich sind und bei denen der kohlenstoffhaltige Teil über Sauerstoffatome an das Metall gebunden ist.

Besonders geeignet sind die Metallsalze von Monocarbonsäuren wie vor allem Formiate und Acetate sowie auch Lactate, Oleate und Stearate. Ganz besonders eignen sich Metallacetylacetonate.

Zur Erhöhung der Löslichkeit der Metallverbindungen in der wäßrigen Phase können organische Säuren wie Ameisen- und Essigsäure zugesetzt werden.

Weiterhin ist es auch möglich, Lösungen frisch gefällter Metallhydroxide, z.B. in Ameisen- und Essigsäure oder höheren Homologen, als Ausgangsverbindungen einzusetzen.

Ausgewählte Beispiele für bevorzugte kohlenstoffhaltige Metallverbindungen sind Aluminiumacetat, Chrom(III)acetat und -formiat, Ceracetylacetonat, Zirkonacetylacetonat, Antimonacetat und besonders Aluminium- und Chrom(III)acetylacetonat.

Werden die Metallformiate verwendet, müssen zusätzlich auch weitere kohlenstoffhaltige Verbindungen zugesetzt werden, um sowohl Metalloxid als auch Kohlenstoff enthaltende Beschichtungen herzustellen.

Hierfür eignen sich insbesondere die aus der DE-A-41 41 069 bekannten Verbindungen der Summenformel (CH₂O)ₙ. Hierbei bedeutet n für eine monomere Einheit in der Regel 1 bis 6, vorzugsweise 5 bis 6. Bei diesen Verbindungen handelt es sich bevorzugt um niedermolekulare Zucker wie Glucose und Dextrose, daneben sind auch höhermolekulare Zucker wie Stärke und polymere Verbindungen wie Polyoxymethylen geeignet.

Der Zusatz dieser Kohlenhydrate kann auch bei Verwendung anderer kohlenstoffhaltiger Metallverbindungen als der Formiate zweckmäßig sein, um den Kohlenstoffgehalt der aufzubringenden Schicht zu erhöhen. Ansonsten wird durch die Wahl der kohlenstoffhaltigen Metallverbindung auch das Mengenverhältnis Kohlenstoff zu Metall im fertigen Pigment bestimmt.

In der Regel enthalten die erfindungsgemäßen Pigmente 0,05 bis 10, bevorzugt 0,1 bis 5, besonders bevorzugt 0,1 bis 1 und ganz besonders bevorzugt 0,1 bis 0,5 Gew.-% Kohlenstoff.

Diese Bereiche gelten auch für die Gehalte der Pigmente an den Metallen, die in der kohlenstoffhaltigen Schicht enthalten sind.

Die Dicke der Kohlenstoff und Metalloxid enthaltenden Schicht beträgt im allgemeinen 1 bis 20, bevorzugt 1 bis 10 nm.

Bei der erfindungsgemäßen Herstellung der kohlenstoffhaltigen Glanzpigmente geht man zweckmäßigerweise so vor, daß man die zu belegenden Substratteilchen in einer wäßrigen Lösung der kohlenstoffhaltigen Metallverbindung und gegebenenfalls des Kohlenhydrats und der organischen Säure dispergiert und dann das Lösungsmittel (Wasser bzw. Wasser/Säure-Gemische) verdampft. Die Entfernung des Lösungsmittels und damit Abscheidung der kohlenstoffhaltigen Metallverbindung und gegebenenfalls des Kohlenhydrats auf die Substratteilchen nimmt man vorzugsweise in einem Sprühtrockner vor.

Anschließend erhitzt man die belegten Substrate zur thermischen Zersetzung der kohlenstoffhaltigen Verbindungen zu Metalloxid und Kohlenstoff sowie gasförmigen Zersetzungsprodukten unter Sauerstoffausschluß und vorzugsweise unter Inertgas auf eine Temperatur von in der Regel 150 bis 1000°C, bevorzugt 250 bis 900°C und besonders bevorzugt 400 bis 800°C.

In der Regel dauert diese Calcinierung 0,5 bis 3 h. Die Reaktionstemperatur hängt von der eingesetzten Metallverbindung ab. Die thermische Zersetzung von Chrom(III)acetylacetonat beginnt beispielsweise bei 170°C, die von Aluminiumacetylacetonat bereits bei 140°C.

Von besonderem Vorteil ist, daß Chrom(III)acetylacetonat beim Aufheizen vor Erreichen des Schmelzpunkts merklich sublimiert, und die Beschichtung mit den Zersetzungsprodukten so auch aus der Gasphase erfolgt, weshalb sehr glatte Beschichtungen erhalten werden.

Besonders im Bereich der angegebenen, höheren Temperaturen ist eine zumindest partielle Reduktion des Metalloxids durch Kohlenstoff oder die bei der Zersetzung entstehenden gasförmigen Spezies nicht vollständig auszuschließen. Im bevorzugten Temperaturbereich ist die Reduktion jedoch weitgehend auszuschließen.

Mit Hilfe des erfindungsgemäßen Verfahrens können kohlenstoffhaltige Glanzpigmente mit hervorragenden Anwendungseigenschaften, insbesondere auch verbesserter Lichtechtheit, hergestellt werden.

Die erfindungsgemäßen Glanzpigmente zeichnen sich weiterhin durch eine hohe Qualität der kohlenstoffhaltigen Schicht, insbesondere deren filmartigen Charakter und deren sehr gute Haftfestigkeit, aus.

Sie eignen sich vorteilhaft für viele Zwecke, wie zur Einfärbung von Lacken, Druckfarben, Kunststoffen, Gläsern, keramischen Produkten und Zubereitungen der dekorativen Kosmetik. Von besonderem Interesse sind sie für die Herstellung von Sicherheitsdruckfarben und damit für die in der nicht vorveröffentlichten DE-A-42 41 753 beschriebene Herstellung von fälschungssicheren, insbesondere schwer oder nicht kopierbaren, Wertschriften. Hierbei sind besonders Pigmente mit einem Kohlenstoffgehalt von ≤ 0,5 Gew.-% zu erwähnen, die bei Applikation auf weißem Papier einen starken Farbflop zeigen.

### Beispiele

Zur Beurteilung ihrer Lichtechtheit wurden die erfindungsgemäßen Pigmente sowohl in Lacke als auch in Siebdruckfarben eingearbeitet und aufgerakelt bzw. gedruckt.

Die Lackherstellung erfolgte durch Einrühren von jeweils 0,4 g Pigment in 3,6 g eines Polyester-Mischlackes mit 21 Gew.-% Feststoffanteil und zweiminütiges Dispergieren im Red Devil. Mit dem auf diese Weise pigmentierten Lack wurden mit einer Rakel (160 µm Naßfilmdicke) Abzüge auf weißem Karton angefertigt.

Die Siebdruckfarben wurde durch Einrühren von jeweils 5 g Pigment in 95 g einer Bindemittellösung auf Basis von Copolymerisaten von Vinylchlorid und Vinylisobutylether (Laroflex^{®}M45, BASF) hergestellt. Die erhaltene Siebdruckfarbe wurde mit einer handelsublichen Siebdruckmaschine (Siebmaschenbreite 112 µm) auf ein gestrichenes, weißes, TiO₂-beschichtetes Papier in einer Schichtdicke von 45 µm aufgebracht und an der Luft getrocknet.

Die erhaltenen Lackierungen und Drucke wurden in einem Sun-Tester mit Xenonlampe 50, 100 und 150 h belichtet.

### Beispiel 1

Zu einer Lösung von 1 g Chrom(III)acetylacetonat in 200 ml Wasser und 40 ml Eisessig wurden 99 g eines TiO2-beschichteten Glimmerpigments mit lila Interferenzfarbe (Iriodin@219 Rutil Perllila; Merck) gegeben. Durch Versprühen wurde das Lösungsmittel verdampft. Das getrocknete Pigment enthielt 0,19 Gew.-% Chrom und 0,86 Gew.-% Kohlenstoff.

Anschließend wurde das Pigment 2 h unter Stickstoff auf 700°C erhitzt.

Das erhaltene, lila gefärbte Pigment enthielt 0,12 Gew.-% Chrom und 0,13 Gew.-% Kohlenstoff. Bei der Applikation als Lack oder Druckfarbe war nach 150 h Belichtung keine Veränderung zu erkennen.

### Beispiel 2

Analog Beispiel 1 wurden 190,9 g des gleichen Glimmerpigments unter Verwendung einer Lösung von 4,1 g Chrom(III)formiat und 5 g Dextrose in 600 ml Wasser beschichtet. Das getrocknete Pigment enthielt 0,5 Gew.-% Chrom und 1 Gew.-% Kohlenstoff.

Das lila gefärbte, calcinierte Pigment enthielt 0,42 Gew.-% Chrom und 0,28 Gew.-% Kohlenstoff. Bei der Applikation war nach 150 h Belichtung ebenfalls keine Veränderung zu erkennen.

## Patentansprüche

1. Glanzpigmente auf Basis beschichteter, plättchenförmiger, silikatischer Subtrate, die eine im wesentlichen aus Kohlenstoff und Aluminium-, Chrom-, Cer-, Zirkon- und/oder Antimonoxid bestehende Schicht enthalten, erhältlich durch Aufbringen kohlenstoffhaltiger Verbindungen der Metalle Aluminium, Chrom, Cer, Zirkon, Aluminium oder Mischungen dieser Verbindungen und gegebenenfalls weiterer kohlenstoffhaltiger Verbindungen der Summenformel (CH₂O)ₙ, in der n für eine monomere Einheit 1 bis 6 bedeutet, auf die Substratteilchen und anschließende thermische Zersetzung der kohlenstoffhaltigen Verbindungen an der Oberfläche der Substratteilchen unter Sauerstoffausschluß.

2. Glanzpigmente nach Anspruch 1, bei denen als kohlenstoffhaltige Verbindungen der Metalle Verbindungen eingesetzt werden, die in wäßrigem Medium, gegebenenfalls in Gegenwart organischer Säuren, löslich sind.

3. Glanzpigmente nach Anspruch 1 oder 2, bei denen als kohlenstoffhaltige Verbindungen der Metalle Verbindungen eingesetzt werden, bei denen der kohlenstoffhaltige Teil über Sauerstoffatome an das Metall gebunden ist.

4. Glanzpigmente nach den Ansprüchen 1 bis 3, bei denen als kohlenstoffhaltige Verbindungen der Metalle die Acetylacetonate oder die Salze organischer Säuren eingesetzt werden.

5. Glanzpigmente nach den Ansprüchen 1 bis 4, bei denen als kohlenstoffhaltige Verbindungen der Metalle die Acetylacetonate, Formiate, Acetate oder Lactate eingesetzt werden.

6. Glanzpigmente nach den Ansprüchen 1 bis 5, bei denen als weitere kohlenstoffhaltige Verbindungen Zucker eingesetzt werden.

7. Glanzpigmente nach den Ansprüchen 1 bis 6, die als Substrat mit Metalloxid beschichtete, silikatische Plättchen enthalten.

8. Verfahren zur Herstellung der Glanzpigmente gemäß den Ansprüchen 1 bis 7, dadurch gekennzeichnet, daß man kohlenstoffhaltige Aluminium-, Chrom-, Cer-, Zirkon- und/oder Antimonverbindungen und gegebenenfalls weitere kohlenstoffhaltige Verbindungen der Summenformel (CH₂O)ₙ, in der n für eine monomere Einheit 1 bis 6 bedeutet, auf die Substratteilchen aufbringt und die kohlenstoffhaltigen Verbindungen anschließend an der Oberfläche der Substratteilchen unter Ausschluß von Sauerstoff thermisch zersetzt.

9. Verwendung der Glanzpigmente gemäß den Ansprüchen 1 bis 7 zur Einfärbung von Lacken, Druckfarben, Kunststoffen, Gläsern und keramischen Produkten.

10. Verwendung der Glanzpigmente gemäß den Ansprüchen 1 bis 7 zur Herstellung von Sicherheitsdruckfarben.

## Claims

1. Luster pigments comprising coated, platelet-shaped, silicatic substrates wherein the coating comprises a layer consisting essentially of carbon and aluminum oxide, chromium oxide, cerium oxide, zirconium oxide and/or antimony oxide, obtainable by applying carbon-containing compounds of the metals aluminum, chromium, cerium, zirconium, antimony or mixtures of these compounds with or without further carbon-containing compounds of the molecular formula (CH₂O)ₙ, where n is from 1 to 6 for one monomeric unit, to the substrate particles and then thermally decomposing the carbon-containing compounds on the surface of the substrate particles under oxygen-excluding conditions.

2. Luster pigments as claimed in claim 1 wherefor the carbon-containing metal compounds used are soluble in an aqueous medium in the absence or presence of organic acids.

3. Luster pigments as claimed in claim 1 or 2 wherefor the carbon-containing metal compounds used have the carbon-containing moiety bonded to the metal via oxygen atoms.

4. Luster pigments as claimed in any of claims 1 to 3 wherefor the carbon-containing metal compounds used are the acetylacetonates or the salts of organic acids.

5. Luster pigments as claimed in any of claims 1 to 4 wherefor the carbon-containing metal compounds used are the acetylacetonates, formates, acetates or lactates.

6. Luster pigments as claimed in any of claims 1 to 5 wherefor the further carbon-containing compounds used are sugars.

7. Luster pigments as claimed in any of claims 1 to 6 wherein the substrate particles are silicatic platelets coated with metal oxide.

8. A process for producing the luster pigments of any of claims 1 to 7 which comprises applying carbon-containing compounds of the metals aluminum, chromium, cerium, zirconium and/or antimony with or without further carbon-containing compounds of the molecular formula (CH₂O)ₙ, where n is from 1 to 6 for one monomeric unit, to the substrate particles and then thermally decomposing the carbon-containing compounds on the surface of the substrate particles under oxygen-excluding conditions.

9. The use of the luster pigments of any of claims 1 to 7 for coloring paints, printing inks, plastics, glasses and ceramic products.

10. The use of the luster pigments of any of claims 1 to 7 for producing security printing inks.

## Revendications

1. Pigments brillants à base de supports silicatés, en forme de lamelles ou de plaquettes, revêtus, qui contiennent une couche se composant, en essence, de carbone et d'oxyde d'aluminium, de chrome, de cérium, de zirconium et/ou d'antimoine, que l'on peut obtenir par l'application de composés contenant du carbone des métaux aluminium, chrome, cérium, zirconium, aluminium, ou de mélanges de ces composés et éventuellement d'autres composés contenant du carbone de la formule globale (CH₂O)ₙ, dans laquelle n a une valeur qui varie de 1 à 6 pour une unité monomérique, sur des particules de support et la décomposition thermique subséquente des composés contenant du carbone à la surface des particules du support sous exclusion d'oxygène.

2. Pigments brillants suivant la revendication 1, dans lesquels on utilise, à titre de composés des métaux contenant du carbone, des composés qui sont solubles en milieu aqueux, éventuellement en présence d'acides organiques.

3. Pigments brillants suivant la revendication 1 ou 2, dans lesquels on utilise, à titre de composés des métaux contenant du carbone, des composés dans lesquels la partie contenant du carbone est liée au métal par l'intermédiaire d'atomes d'oxygène.

4. Pigments brillants suivant les revendications 1 à 3, dans lesquels on met en oeuvre, à titre de composés des métaux contenant du carbone, les acétylacétonates ou les sels d'acides organiques.

5. Pigments brillants suivant les revendications 1 à 4, dans lesquels on met en oeuvre, à titre de composés des métaux contenant du carbone, les acétylacétonates, les formiates, les acétates, ou les lactates.

6. Pigments brillants suivant les revendications 1 à 5, dans lesquels on met en oeuvre, à titre de composés contenant du carbone supplémentaires, du sucre.

7. Pigments brillants suivant les revendications 1 à 6, qui contiennent, à titre de support, des plaquettes ou lamelles silicatées, revêtus d'un oxyde de métal.

8. Procédé de préparation de pigments brillants suivant l'une quelconque des revendications 1 à 7, caractérisé en ce que l'on applique sur les particules de support des composés d'aluminium, de chrome, de cérium, de zirconium et/ou d'antimoine, contenant du carbone et éventuellement des composés contenant du carbone supplémentaires de la formule globale (CH₂O)ₙ, dans laquelle n a une valeur de 1 à 6 pour une unité monomérique et on décompose ensuite thermiquement les composés contenant du carbone à la surface des particules de support sous exclusion d'oxygène.

9. Utilisation des pigments brillants suivant l'une quelconque des revendications 1 à 7 pour la coloration ou teinture de laques ou vernis, d'encres d'impression, de matières plastiques, de verres et de produits céramiques.

10. Utilisation des pigments brillants suivant l'une quelconque des revendications 1 à 7 pour la fabrication d'encres d'impression de sécurité.
